# EUROPEAN PATENT SPECIFICATION

(11) **EP 2 178 960 B1**
(45) Date of publication and mention of the grant of the patent: **25.05.2011**
(21) Application number: 07804605.9
(22) Date of filing: 13.07.2007
(51) Int. Cl.: C08K 3/32, C08K 9/02, C09C 1/00, C09K 21/04

(54) **HALOGEN-FREE FLAME RETARDANT ADDITIVE**
HALOGENFREIES FLAMMSCHUTZADDITIV
ADDITIF IGNIFUGEANT EXEMPT D'HALOGÈNE

(43) Date of publication of application: 28.04.2010
(73) Proprietor: Italmatch Chemicals S.P.A., 16149 San Benigno (Genova) (IT)
(72) Inventor: ZUCCHELLI, Ugo, I-16149 San Benigno (Genova) (IT)
(74) Representative: Trupiano, Federica
(86) International application number: PCT/IB2007/001976
(87) International publication number: WO 2009/010812

(56) References cited:
- US-A1- 2004 049 063
- US-A1- 2005 101 708
- US-B1- 6 207 736
- US-B1- 6 420 459
- US-B1- 6 503 969

## Description

The present invention relates to a halogen-free flame retardant additive, essentially comprising hypophosporous acid metallic salts coated with inorganic hydrates and/or organic salts, useful as a flame retardant for polymer compositions, alone or in combination with other flame retardants and optionally further conventional components.

### BACKGROUND OF THE INVENTION

Halogen free flame retardant additives are of increasing interest in the thermoplastic polymers market. Basic requirements for these products are good processing in compounding and moulding conditions, good mechanical properties in the solid state and good flame retardancy in reinforced and unreinforced polymers. Hypophosphorus acid metal salts, also called hypophosphites or inorganic phosphinates (phosphorus valence state = +1) have been reported as effective halogen free flame retardant additives for polymers. Thermoplastic polyester moulding materials containing a phosphinic acid salts have been described in the art, see for instance WO 03/014212 (equivalent to US 71692812) and WO 99/57187 (equivalent to US 6,503,969).

According to WO 03/014212, a polyester comprising a mixture of a phosphinic acid salt having a preferred particle size distribution and a nitrogen flame retardant, preferably mixed in advance and then feed to the melt, confer a particularly desired set of properties to the moulded composition.

According to WO 99/57187, a polyester comprising a mixture of a phosphinic acid salt and a nitrogen containing flame retardant, excluding melamine cyanurate, shows good flame retardant properties.

The phosphinic acid salts disclosed in the above documents apparently show a good flame retardant performance but at same time they cause the degradation of the polymeric composition to which they are added.

In fact, said additives chemically interact with the polymeric structure, provoking degradation or crosslinking, depending on the chemical nature of the specific polymer and of the additives. Crosslinking and degradation are of course unwanted phenomena in thermoplastic processing, as they cause a change in the rheology of the polymers and in the resultant mechanical properties of polymer moulding.

For instance, crosslinking of thermoplastic polymers results in an increased viscosity of the melt, with subsequent increasing in temperature if the melt is continuously subjected to shear forces. Temperature plays a fundamental role in accelerating this speed of reaction as well as in decomposing additives themselves. If crosslinking is high the thermoplastic is reverted into a so called thermoset polymer.

### SUMMARY OF THE INVENTION

One object of the present invention is to provide halogen-free flame retardant additives showing very good processing behaviour and mechanical performances, thus overcoming the drawbacks of the prior art additives.

It was in fact surprisingly found out that applying a particular surface coating to hypophosporous acid metallic salts results in more performing flame retardant additives for polymeric compositions.

### DESCRIPTION OF THE INVENTION

So, according to one of its aspects, a subject-matter of the present invention is a hypophosporous acid metallic salt characterized in that it is surface-coated with at least one compound selected from:
(a) alkali-metal or alkali-earth hydrates;
(b) hydrotalcite or hydrotalcite-like compounds; and
(c) alkali-metal or alkali-earth organic acid salts.

The hypophosporous acid metallic salt of the invention is herein after also called "surface coated hypophosporous acid metallic salt" or " surface-coated hypophosphite salt" and includes any metallic salt of hypophosporous acid, such as any natural or synthetic alkali-metal and alkali-earth metal salts, for instance magnesium hypophosphite, calcium hypophosphite and aluminium hypophosphite. According to the present invention, the term "alkali-metal or alkali-earth hydrates" includes for instance magnesium hydroxide and aluminium hydroxide.

According to the present invention, the terms "hydrotalcite" and "hydrotalcite-like compounds" designate natural or synthetic compounds made of aluminium-magnesium-hydroxycarbonate, optionally hydrated, and derivatives thereof. Examples of hydrotalcite-like derivatives are compounds which are known also as layered double hydroxides or anionic clays, which chemical composition can be expressed by the general formula M^{II}ₗ₋ₓM^{III}ₓ(OH)₂Aⁿ⁻_{x/n} yH₂O where M^{II} and M^{III} are divalent and trivalent metal cations and Aⁿ⁻ is an n-valent anion, respectively. One example of commercially available synthetic hydrotalcite derivative is DHT-4A, provided by Kyowa.

According to the present invention, the term "alkali-metal or alkali-earth organic acid salts" means any natural or synthetic organic acid alkali-metal or alkali-earth salt. The term "organic acid" includes aromatic organic acids, such as benzoic acid, and aliphatic acids, such as fatty acids C8 - C22, e.g. caprylic, capric, lauric, myristic, palmitic, stearic, arachidic, behenic or mixtures.

Preferred alkali-metal or alkali-earth organic acid salts are sodium stearate, magnesium stearate, calcium stearate, sodium benzoate and potassium benzoate. According to a preferred embodiment, preferred compounds (a) to (c) are magnesium stearate, sodium stearate and mixtures thereof.

According to a preferred embodiment, the hypophosporous acid metallic salt is surface-coated by one or more compounds selected from magnesium hydroxide, synthetic hydrotalcite, sodium benzoate, potassium benzoate, sodium stearate and calcium stearate.

Also, different hypophosporous acid metallic salts may be mixed and surface-coated by one or more compounds (a) to (c) above, to provide valuable flame retardant additives, according to the invention.

According to the present invention, the hypophosporous acid metallic salt is surface-coated by intimate contacting of the hypophosporous acid metallic salt and one or more compounds (a) to (c) above, preferably in a solvent, such as water, followed by filtering and drying of the product thus obtained.

Alternatively, the hypophosporous acid metallic salt is surface-coated by mechanical grinding in a milling machine and optionally mixing the dry powders in a slow or high speed mechanical mixer.

The ratio hypophosporous acid metallic salt/compounds (a) to (c) is preferably from 100/1 to 5/1 (w/w), preferably 100/1 to 10/1 (w/w).

The surface coating process of a hypophosporous acid metallic salt with a compound selected from (a) to (c) above, represents a further aspect of the present invention.

If desired, a binding agent can be used in the surface-coating process of the invention to improve the adhesion of the coating compounds to the surface of the hypophosporous acid metallic salt. Illustrative examples of binding agents are organic binders, such as synthetic or natural waxes, modified waxes, liquid hydrocarbons or epoxide resins.

A detailed description of the process of the invention is given the experimental part of the present application.

The surface-coated hypophosporous acid metallic salts of the invention show improved flame-retardant performances with respect to the compounds known in the art. They can be used as flame retardant, alone or in combination with further conventional flame retardants or with processing aids, process and heat stabilizers, UV stabilizers, antidripping agents, pigments, mould release agents, nucleants, inorganic fillers, fibers, etc.

More particularly, they can be advantageously added to polymeric compositions and articles made thereof, such as thermoplastic polymeric compositions, polyesters or polyamides, either reinforced or unreinforced with glass fibers.

The polymeric compositions comprising the surface-coated hypophosporous acid metallic salts of the invention show improved processing performances, that is to say, they may be moulded at high temperature and for a long time with a reduced changing of molecular weight of the polymer.

Also, the polymeric compositions comprising the surface-coated hypophosporous acid metallic salts show good mechanical properties, as impact, tensile and flexural properties of the moulded polymer composition are only minimally affected from the addition of the novel flame retardant.

The flame retardant properties of surface-coated hypophosporous acid metallic salts of the invention ranks V0 according to UL 94 and pass Glow wire test.

Details of the flame retardant properties as well as comparative tests are reported in the experimental section.

For their use as flame retardant agents, the surface-coated hypophosporous acid metallic salts of the invention may be added to the polymeric composition in a ratio polymeric composition/ surface-coated hypophosporous acid metallic salts which varies from 50/1 to 1/1 preferably from 20/1 to 3/1, for instance 5/1 to 4/1 (w/w). The polymeric compositions comprising one or more surface-coated hypophosporous acid metallic salts of the invention represents a further subject-matter of the invention.

The polymeric composition of the invention may comprise different surface-coated hypophosporous acid metallic salts according to the invention.

According to a preferred embodiment, the polymeric compositions of the invention further comprise an epoxide resin and/or an organic binder.

According to another preferred embodiment, the polymeric compositions of the invention further comprise a nitrogen containing flame retardant.

According to another preferred embodiment, the polymeric compositions are PBT (polybutyleneterephthalate) resins.

The polymeric compositions of the invention are suitable to manufacture many different articles. Such articles represent another subject-matter of the invention. The invention will be illustrate by means of the following examples in a non-limitative way.

In the following experimental part, the "Examples" relate to the surface-coated hypophosporous acid metallic salts of the invention, whereas the "Comparative Examples" relate to the flame retardant compounds known in the art. In the same way, "Test Examples" designate the assays which have been carried out by using the designate surface-coated hypophosporous acid metallic salts of the invention and "Comparative Test Examples" the assays which have been carried out by using the flame retardant compounds known in the art.

### EXPERIMENTAL PART

In the examples the following components were used:
*Commercially available polymers:*
   Polyamide 6,6 glass filled 30% (Latamid 6,6 GF30, by Lati)
   Polybutyleneterephtalate (Niblan V100, by Soredi)
   Polybutyleneterephtalate glass filled 30% (Niblan F30, by Soredi)
*Lubricants:*
   Pentaerythritolmonostearate (Loxiol P861, by Cognis), PTS
   Ethylen Bis Stearamide (EBS, by Croda)
*Stabilizers:*
   Hindered phenol heat stabilizer (Irganox 1098, Ciba)
*Hypophosphites:*
   Aluminium hypophosphite (IP-A, by Italmatch Chemicals)
   Magnesium hypophosphite, anhydrous (IP-G, by Italmatch Chemicals)
   Calcium hypophosphite (IP-C, by Italmatch Chemicals)
   *FR synergists:*
   Melamine cyanurate (Melagard MC25, by Italmatch Chemicals)
*Surface coating agents:*
   Liquid epoxy resin modified to make it readily dispersable in water (Epikote 255, by Hexion)
   Toramide - curing agent for the epoxy resin
   Magnesium hydroxide (Magnifin H5 and H10 by Martinsweerk; Kisuma 5A by Kisuma Chemicals)
   Magnesium oxide (Sigma Aldrich), MgO
   Zinc oxide (Sigma Aldrich), ZnO
   Synthetic hydrotalcite (DHT-4A, Kyowa)
   Sodium benzoate (Velsicol), Na benzoate
   Potassium Benzoate (ProBenz PG, by Velsicol), K Benzoate
   Sodium stearate (Undesa), Na stearate
   Zinc Borate (Borax)
   Zinc Sulfide (Sachtolith HDS by Sachtleben), ZnS
   Calcium carbonate (Sigma Aldrich), CaCO3
   Calcium stearate (Sogis), Ca stearate

### Comparative Example 1

10 grams of Epikote 255 epoxy resin are dispersed with mechanical stirring into 30 cc of deionized water, and added to 200 grams of IP-A dispersed in 300 cc of deionized water. The emulsion is stirred for 15 minutes, then further 10 grams of Toramide emulsionized into 30 cc of deionized water are added and the final emulsion is left at 80°C for 4 hours with mechanical stirring. The solid is filtered, washed and dried at 120°C in an oven under vacuum, giving 209 grams of powder. Thermal Gravimetric Analysis of the powder measured with a SETARAM instrument model STA 92-16.18 in air at a scanning speed of 10°C show a DTG peak at 330°C, practically identical to the pure IP-A in the same conditions (331°C).

### Example 2

10 grams of Epikote 255 epoxy resin are dispersed with mechanical stirring into 30 cc of deionized water, and added to 200 grams of IP-A and 10 grams of Magnifin H5 dispersed in 300 cc of deionized water. The emulsion is stirred for 15 minutes, then further 10 grams of Toramide emulsionized into 30 cc of deionized water are added and the final emulsion is left at 80°C for 4 hours with mechanical stirring. The solid is filtered, washed and dried at 120°C in an oven under vacuum, giving 214 grams of powder.

### Example 3

In a laboratory ceramic ball mill jar model Giuliani are introduced 180 grams of IP-A and 5 grams of Magnifin H5. The jar is left working for 30 minutes and the powder discharged.

Thermal Gravimetric Analysis of the powder measured with a SETARAM instrument model STA 92-16.18 in air at a scanning speed of 10°C show a DTG peak at 346°C, higher than pure IP-A in the same conditions (331°C).

### Examples 4-12, 20, 24-38 and Comparative Examples 13-19, 21-23

In the same laboratory mill than Example 3 and with the same procedure different surface coated hypophosphite are prepared using the following ingredients and quantities:

| Example number | Comparative Example number | Hypophosphite | Surface Coating |
|---|---|---|---|
| 4 | | IP-A=180 grams | Magnifin H5=10 grams |
| 5 | | IP-A=180 grams | Magnifin H5=20 grams |
| 6 | | IP-A=180 grams | Magnifin H5=40 grams |
| 7 | | IP-A=180 grams | DHT-4A=20 grams |
| 8 | | IP-A=180 grams | Na benzoate= 20 grams |
| 9 | | IP-A=180 grams | K benzoate= 20 grams |
| 10 | | IP-A=180 grams | Na stearate=20 grams |
| 11 | | IP-A=180 grams | Ca stearate=5 grams |
| 12 | | IP-A=180 grams | Ca stearate=10 grams |
| | 13 | IP-A=180 grams | Melagard MC25=40 grams |
| | 14 | IP-A=180 grams | Melagard MC25=20grams |
| | 15 | IP-A=180 grams | Zn Borate=40 grams |
| | 16 | IP-A=180 grams | CaCO3=20 grams |
| | 17 | IP-A=180 grams | CaCO3=40 grams |
| | 18 | IP-A=180 grams | ZnS=10 grams |
| | 19 | IP-A=180 grams | ZnS=40 grams |
| 20 | | IP-M=180 grams | Magnifin H5=5 grams |
| | 21 | IP-M=180 grams | Zn Borate=40 grams |
| | 22 | IP-M=180 grams | ZnO =20 grams |
| | 23 | IP-M=180 grams | MgO =20 grams |
| 24 | | IP-M=68 grams; IP-A= 120 grams | Magnifin H5=12 grams |
| 25 | | IP-C=180 grams | Magnifin H5=5 grams |
| 26 | | IP-C=180 grams | DHT-4A=5 grams |
| 27 | | IP-C=180 grams | Ca stearate=5 grams |
| 28 | | IP-C=180 grams | Ca stearate=10 grams |
| 29 | | IP-C=240 grams | Magnifin H5=20 grams |
| 30 | | IP-G=240 grams | Magnifin H5=20 grams |
| 31 | | IP-A=240 grams | Magnifin H5=20 grams |
| 32 | | IP-A= 260 grams; IP-G= 30 grams | Magnifin H5=10 grams |
| 33 | | IP-A=200 grams; IP-G=90 grams | Magnifin H5=10 grams |
| 34 | | IP-A=295 grams | Magnifin H5=5 grams |
| 35 | | IP-A=240 grams | Magnifin H5=20 grams |
| 36 | | IP-A=240 grams | Magnifin H10=20 grams |
| 37 | | IP-A=250 grams | Magnifin H10= 10 grams |
| 38 | | IP-A=250 grams | Magnifm H10=5 grams |

### Test Examples and Comparative Test Examples 38 - 69

In table 1, the results of melt stability in PA 6,6 glass filled 30 % in a laboratory torque rheometer plasicizer model Brabender (50 grams chamber) are shown. Polymer and additives are introduced in the machine, and torque is recorded as a function of time at different temperatures. Crosslinking of polyamide lead to dramatic step increase of torque with burning of the sample itself.

In Column 1 is reported the hypophosphite type, in Columns 2 and 3 the quantities of additives and polymer used.

In Columns 5, 6, 7 time is reported in minutes, indicating the end of the test at different temperatures. The higher the time lap, the better the process stability. Column 7 reports the Test Example numbers and Column 8 the Comparative Test Example numbers.

Example 39 shows that Polyamide 6,6 glass fiber reinforced is stable up to 310°C without additives.

Test Example 40 shows that IP-A affect the melt stability of polyamides, at 300°C the melt burn immediately with flames.

Comparative Ex. 41 show that the epoxide surface coating does not improve melt stability of aluminium hypophosphite when used alone (compared to Comp. Ex. 40), but it does improve the performances of magnesium hydroxide coating very likely allowing a better sticking to the hypophosphite surface (see Comparative Ex. 41, Ex. 42)

Test Examples 43 - 46 show the improvement of magnesium hydroxide coating on melt stability.

Test Examples 47-52 show the improvement of synthetic hydrotalcite, sodium and potassium benzoate, sodium and calcium stearate. Sodium stearate (Ex. 50) is particularly effective, so due to his double nature of effective surface coating and partially wax behaviour is useful in mixed coatings toghether with magnesium hydroxide, improving stickiness of the coating to the hypophosphite particles. Comparative Test Examples 53-59 show that melamine cyanurate, zinc borate, calcium carbonate and zinc sulphide are not effective.

Comparative Test Example 60 and Test Example 61 show that magnesium hydroxide is also effective in improving melt stability of magnesium hypophosphite, whereas Comparative Test Examples 62-64 show that zinc borate, zinc oxide and zinc sulfide are not.

Test Example 65 show that magnesium hydroxide coating is also effective when used on mixtures of aluminium and magnesium hypophosphite.

Test Examples 66-70 show that magnesium hydroxide, synthetic hydrotalicte and calcium stearate are effective in improving melt stability of calcium hypophosphite into PA 6,6.

**Table 1:**

| Column 1 | Column 2 | Column 3 | Column | Column | Column 4 5 6 7 | Column | Column 8 |
|---|---|---|---|---|---|---|---|
| Hypophosphite type | Hypophosphite quantity | PA 6,6 GF 30% | 290°C | 300°C | 310°C | Ex. N° | Comp. Ex. N° |
| - - - | - - - | 50 grams | >15 min | >15 min | >15 min | | 39 |
| IP-A | 9 grams | 41 grams | 6 min | B | ND | | 40 |
| Comp. Ex. 1 | 9,5 grams | 40,5 grams | 5 min | ND | ND | | 41 |
| Ex. 2 | 10 grams | 40 grams | 10 min | ND | ND | 42 | |
| Ex. 3 | 9,25 grams | 40,75 grams | 8 min | ND | ND | 43 | |
| Ex. 4 | 9,5 grams | 40,5 grams | 8 min | ND | ND | 44 | |
| Ex. 5 | 10 grams | 40 grams | >15 min | 8 min | ND | 45 | |
| Ex. 6 | 11 grams | 39 grams | >15 min | >15 min | ND | 46 | |
| Ex. 7 | 10 grams | 40 grams | ND | 4 min | ND | 47 | |
| Ex. 8 | 10 grams | 40 grams | >15 min | 11 min | ND | 48 | |
| Ex. 9 | 10 grams | 40 grams | >15 min | 9 min | ND | 49 | |
| Ex. 10 | 10 grams | 40 grams | >15 | >15 | ND | 50 | |
| Ex. 11 | 9,25 grams | 40,75 grams | 7 min | ND | ND | 51 | |
| Ex. 12 | 9,5 grams | 40,5 grams | 8 min | ND | ND | 52 | |
| Comp. Ex. 13 | 11 grams | 39 grams | 4 min | ND | ND | | 53 |
| Comp. Ex. 14 | 10 grams | 40 grams | 4 min | ND | ND | | 54 |
| Comp. Ex. 15 | 11 grams | 39 grams | 3 min | ND | ND | | 55 |
| Comp. Ex. 16 | 10 grams | 40 grams | 4 min | ND | ND | | 56 |
| Comp. Ex. 17 | 11 grams | 39 grams | 4 min | ND | ND | | 57 |
| Comp. Ex. 18 | 9,5 grams | 40,5 grams | 5 min | ND | ND | | 58 |
| Comp. Ex. 19 | 11 grams | 39 grams | 4 min | ND | ND | | 59 |
| IP-M | 9 grams | 41 grams | 9 min | ND | ND | | 60 |
| Ex. 20 | 9,25 grams | 40,75 grams | >15 min | ND | ND | 61 | |
| Comp. Ex. 21 | 11 grams | 39 grams | 8 min | ND | ND | | 62 |
| Comp. Ex. 22 | 10 grams | 40 grams | 6 min | ND | ND | | 63 |
| Comp. Ex. 23 | 10 grams | 40 grams | 10 min | ND | ND | | 64 |
| Ex. 24 | 10 grams | 40 grams | 8 min | 6 min | ND | 65 | |
| IP-C= 9 grams | 9 grams | 41 grams | 3 min | ND | ND | | 66 |
| Ex. 25 | 9,25 grams | 40,75 grams | >15 min | > 15min | 8min | 67 | |
| Ex. 26 | 9,25 grams | 40,75 grams | ND | 8 min | ND | 68 | |
| Ex. 27 | 9,25 grams | 40,75 grams | 7min | ND | ND | 69 | |
| Ex. 28 | 9,5 grams | 40,5 grams | 11 min | ND | ND | 70 | |

| | | | | | | | |
|---|---|---|---|---|---|---|---|
| Legend: B= Burn immediately ND= Not Determined | | | | | | | |

### Test Examples and Comparative Test Examples 71 - 79

Components reported in table 2 are compounded in a 20 mm twin screw extruded with a temperature profile in the range 250-270°C. Polymer is dried 1 night in an oven at 120°C before extruding. After drying a second time the compound in the same conditions pellets were injection moulded at different thickness, and 5 specimens were conditioned for 24 hours at 23°C and 50% humidity. Flammability have been reported according to UL-94 procedure. When tests do not meet V0, V1 and V2 an NC classification has been given, when it was not possible to extrude or to inject samples an ND classification was attributed.

Comparative Test Examples 71-74 show the individual effectiveness of aluminium, calcium and magnesium hypophosphites. Aluminium hypophosphite is highly effective (Comp Ex. 72), but not enough stable in the melt. As a matter of fact, stopping the extruder or the injection moulding machine for some minutes caused burning and flame. Calcium hypophosphite was not possible to extrude at all (Comp. Test Example 73), when magnesium hypophospite show satisfactory melt stability (Comp. Ex. 74).

Test Examples 76-78 show that magnesium hydroxide coated aluminium and magnesium hypophosphites result in satisfactory flame retardancy and improved melt stability compared to the uncoated ones.

**Table 2**

| | Comp. 71 | Comp. 72 | Comp. 73 | Comp. 74 | Comp. 75 | Ex. 76 | Ex. 77 | Ex. 78 |
|---|---|---|---|---|---|---|---|---|
| PA 6,6 GF 30% | | | | | | | | |
| Irganox 1098 | 0,2% | 0,2% | 0,2% | 0,2% | 0,2% | 0,2% | 0,2% | 0,2% |
| EBS | 0,3% | 0,3% | 0,3% | 0,3% | 0,3% | 0,3% | 0,3% | 0,3% |
| IP-A | | 18% | | | 6% | | | |
| IP-C | | | 18% | | | | | |
| IP-M | | | | 18% | 14% | | | |
| Ex. 5 | | | | | | 20% | | |
| Ex. 6 | | | | | | | 22% | |
| Ex. 24 | | | | | | | | 20% |
| | | | | | | | | |
| UL-94 3,2mm | NC | V0 | ND | V0 | V0 | V0 | V0 | V0 |
| UL-941,6mm | NC | V0 | ND | NC | V0 | V0 | V0 | V0 |
| UL-94 0,8mm | NC | V0 | ND | NC | NC | V0 | NC | ND |
| | | | | | | | | |
| Brabender melt stability at 290°C (minutes) | >15 | 6 | 2 | 10 | 6 | >15 | >15 | 8 |
| Brabender melt stability at 300°C (minutes) | >15 | B* | B* | 8 | B* | 8 | >15 | 6 |

| | | | | | | | | |
|---|---|---|---|---|---|---|---|---|
| *Burn, with flame ND = Not Determined NC = Not Classified | | | | | | | | |

### Test Examples and Comparative Test Examples 79-87

Components reported in table 3 are compounded in a 20 mm twin screw extruded with a temperature profile in the range 210-230°C. The polymer is dried overnight in an oven at 120°C before extruding. After drying a second time the compound in the same conditions pellets were injection moulded at different thickness, and 5 specimens were conditioned for 24 hours at 23°C and 50% humidity. Flammability have been reported according to UL-94 procedure. When tests do not meet V0, V1 and V2 an NC classification has been given, when it was not possible to extrude or to inject samples an ND classification was attributed.

Melt Flow Index (MFI) measurements were done at 250°C with a 2,16 kg load and were recorded after compounding and after 3 and 5 extrusion passage in a twin screw extruder at 210-230°C in the same conditions for all the compositions in the table. Differences in MFI between the value after 5 passage and after compounding are reported as Delta MFI and they represent the entity of degradation (the higher the number, the higher the degradation of the polymer).

Comparative Test Examples 79-82 show the effect of the uncoated hypophosphites in blend with a nitrogen flame retardant synergist. Flame retardant performances are satisfied, but the Delta MFI is in the best case 3 times higher than to comparative Test Example 79 (blank).

Comparative Test Example 83 and Test Example 84 show the positive effect of surface coating during grinding compared to the simple blending of powder in a extruder, both in terms of flame retardancy and polymer degradation.

Test Examples 85-87 show that it is possible to reduce degradation of the polymer and to maintain excellent flame retardant performances especially by using aluminium hypophosphite or mixtures of aluminium and magnesium hypophosphite coated according to the present invention.

**Table 3:**

| | Comp. 79 | Comp. 80 | Comp. 81 | Comp. 82 | Comp. 83 | Ex. 84 | Ex. 85 | Ex. 86 | Ex. 87 |
|---|---|---|---|---|---|---|---|---|---|
| PBT GF 30% | | | | | | | | | |
| PTS | 0,3% | 0,3% | 0,3% | 0,3% | 0,3% | 0,3% | 0,3% | 0,3% | 0,3% |
| IP-A | | 12% | | | 12% | | | | |
| IP-C | | | 12% | | | | | | |
| IP-M | | | | 12% | | | | | |
| Magnifin H5 | | | | | 1% | | | | |
| Ex. 31 | | | | | | 13% | | | |
| Ex. 32 | | | | | | | 15% | | |
| Ex. 33 | | | | | | | | 15% | |
| Ex. 34 | | | | | | | | | 15% |
| Melagard MC25 | | 12% | 12% | 12% | 11% | 11% | 5% | 5% | 5% |
| | | | | | | | | | |
| UL-94 3,2mm | NC | V-0 | V-0 | V-0 | V-0 | V-0 | V-0 | V0 | V0 |
| UL-94 1,6mm | NC | V-0 | V-0 | V-0 | V-2 | V-0 | V-0 | V0 | V0 |
| UL-94 0,8mm | NC | V-2 | NC | NC | V2 | V2 | V2 | V2 | V2 |
| | | | | | | | | | |
| MFI | 22 | 20 | 48 | 21 | 24 | 25 | 20 | 19 | 22 |
| MFI after 3 extrusion | 24 | 36 | 160 | 26 | 30 | 25 | 22 | 21 | 24 |
| MFI after 5 extrusion | 26 | 50 | >230 | 33 | 38 | 32 | 25 | 23 | 28 |
| | | | | | | | | | |
| Delta MFI (5 ext-0 ext) | 4 | 30 | >200 | 12 | 14 | 7 | 5 | 4 | 6 |

| | | | | | | | | | |
|---|---|---|---|---|---|---|---|---|---|
| NC = Not Classified | | | | | | | | | |

### Test Examples and Comparative Test Examples 88 - 92

Components reported in table 4 are compounded in a 20 mm twin screw extruded with a temperature profile in the range 210-230°C. Polymer is dried overnight in an oven at 120°C before extruding. After drying a second time the compound in the same conditions pellets were injection moulded at different thickness, and 5 specimens were conditioned for 24 hours at 23°C and 50% humidity. Flammability have been reported according to UL-94 procedure. When tests do not meet V0, V1 and V2 an NC classification has been given, when it was not possible to extrude or to inject samples an ND classification was attributed.

Melt Flow Index (MFI) measurements were done at 250°C with a 2,16 kg load and were recorded after compounding and after 3 and 5 extrusion passage in a twin screw extruder at 210-230°C in the same conditions for all the compositions in the table. Differences in MFI between the value after 5 passage and after compounding are reported as Delta MFI and they represent the entity of degradation (the higher the number, the higher the degradation of the polymer).

Mechanical properties were measured using an Instron 45045 instrument, in the same conditions for all recipes in the table and according to normatives ISO 527-1 and ISO 179-1.

High values of Charpy impact, Tensile Strength at break, Elongation at break and flexural modulus are highly preferred and are shown by Test Examples 89-92 when compared to Test Example 88.

**Table 4**

| | Comp.88 | Ex.89 | Ex.90 | Ex.91 | Ex.92 |
|---|---|---|---|---|---|
| PBT unfilled | | | | | |
| PTS | 0,2% | 0,2% | 0,2% | 0,2% | 0,2% |
| IP-A | 18 % | | | | |
| Ex. 35 | | 18% | | | |
| Ex. 36 | | | 18% | | |
| Ex. 37 | | | | 18% | |
| Ex. 38 | | | | | 18% |
| Melagard MC-25 | 6 % | 6% | 6% | 6% | 6% |
| | | | | | |
| Charpy impact 23°C (KJ/m2) | 2,05 | 2,02 | 2,40 | 2,17 | 2,09 |
| T.S. @ break (Mpa) | 45,6 | 49,1 | 48,9 | 49,7 | 49,2 |
| E.B. @ break (%) | 2,5 | 3,4 | 3 | 3,4 | 2,8 |
| Module E (Mpa) | 3441 | 3439 | 3410 | 3393 | 3453 |
| | | | | | |
| UL-94 3,2 mm | V0 | V0 | V0 | V0 | V0 |
| UL-94 1,6 mm | V2 | V2 | V2 | V0 | V0 |
| UL-94 0,8 mm | V2 | V2 | V2 | V2 | V2 |
| | | | | | |
| MFR 250°C | 20,0 | 20,1 | 20,9 | 25,8 | 25,4 |
| MFI 250°C after 3 extrusion | 26,8 | 20,3 | 25,4 | 27,2 | 29,7 |
| MFI 250°C after 5 extrusion | 35,9 | 32,2 | 31,1 | 31,3 | 35,1 |
| Delta MFI (5 ext-0 ext) | 15,9 | 12,1 | 10,3 | 5,5 | 9,7 |

## Claims

1. A hypophosporous acid metallic salt **characterized in that** it is surface-coated with at least one compound selected from:
(a) alkali-metal or alkali-earth hydrates;
(b) hydrotalcite or hydrotalcite-like compounds; and
(c) alkali-metal or alkali-earth organic acid salts.

2. The hypophosporous acid metallic salt according to claim 1, which is selected from hypophosporous acid natural or synthetic, alkali-metal salts and alkali-earth metal salts.

3. The hypophosporous acid metallic salt according to claim 2, which is selected from magnesium hypophosphite, calcium hypophosphite and aluminium hypophosphite.

4. The hypophosporous acid metallic salt according to claims 1 to 3, **characterized in that** it is surface-coated by one or more compounds selected from magnesium hydroxide, synthetic hydrotalcite, sodium benzoate, potassium benzoate, sodium stearate, and calcium stearate.

5. The hypophosporous acid metallic salt according to claims 1 to 4, **characterized in that** ratio hypophosporous acid metallic salt/compounds (a) to (c) is from 100/1 to 5/1 (w/w).

6. A process for the preparation of the hypophosporous acid metallic salt according to claims 1 to 5, **characterized in that** a hypophosporous acid metallic salt is surface-coated by intimate contacting of the hypophosporous acid metallic salt and one or more compounds (a) to (c) as defined in claim 1, followed by filtering and drying of the product thus obtained.

7. Process according to claim 6, which is carried out in a solvent.

8. A process for the preparation of the hypophosporous acid metallic salt according to claims 1 to 5, **characterized in that** a hypophosporous acid metallic salt is surface-coated by mechanical grinding in a milling machine and optionally mixing in a slow or high speed mechanical mixer.

9. Process according to claims 6 to 8, wherein a binding agent is added.

10. The use of the hypophosporous acid metallic salt according to claims 1 to 5, as flame retardant in thermoplastic polymeric compositions, polyesters or polyamides, either reinforced or unreinforced with glass fibers.

11. Polymeric composition which comprises at least one hypophosporous acid metallic salt according to claims 1 to 5.

12. Polymeric composition according to claim 11, **characterized in that** it comprises aluminium hypophosphite or a mixture of aluminium and magnesium hypophosphite surface-coated according to claim 1.

13. Polymeric composition according to claim 12, **characterized in that** the ratio polymeric composition/ surface-coated hypophosporous acid metallic salts which varies from 50/1 to 1/1 (w/w).

14. Polymeric composition according to claim 13, **characterized in that** the ratio polymeric composition/ surface-coated hypophosporous acid metallic salts which varies from 20/1 to 3/1 (w/w).

15. Polymeric composition according to claims 11 to 14, **characterized in that** it further comprises an epoxide resin and/or an organic binder.

16. Polymeric composition according to claims 11 to 15, **characterized in that** it comprises more than one surface-coated hypophosporous acid metallic salts according to claims 1 to 5.

17. Polymeric composition according to claims 11 to 16, wherein the polymer is selected from polyesters and polyamides.

18. Polymeric composition according to claims 11 to 17, wherein the polymer is polybutyleneterephthalate (PBT).

19. Polymeric composition according to claims 11 to 18, which further comprises a nitrogen containing flame retardant.

20. Flame retardant additive for polymeric compositions which comprises at least one surface-coated hypophosporous acid metallic salts according to claims 1 to 5.

21. Article made of a polymeric composition according to claims 11 to 19.

## Patentansprüche

1. Ein Metallsalz der Hypophosphorigsäure, **dadurch gekennzeichnet, dass** es mit mindestens einer Verbindung ausgewählt aus
(a) Alkalimetall- oder Erdalkalimetallhydraten;
(b) Hydrotalcit oder Hydrotalcit-ähnlichen Verbindungen; und
(c) Alkalimetall- oder Erdalkalimetallsalzen organischer Säuren; oberflächenbeschichtet ist.

2. Das Metallsalz der Hypophosphorigsäure gemäß Anspruch 1, das ausgewählt ist aus natürlichen oder synthetischen Alkalimetallsalzen und Erdalkalimetallsalzen der Hypophosphorigsäure.

3. Das Metallsalz der Hypophosphorigsäure gemäß Anspruch 2, das ausgewählt ist aus Magnesiumhypophosphit, Calciumhypophosphit und Aluminiumhypophosphit.

4. Das Metallsalz der Hypophosphorigsäure gemäß den Ansprüchen 1 bis 3, **dadurch gekennzeichnet, dass** es durch eine oder mehrere Verbindungen ausgewählt aus der Gruppe Magnesiumhydroxid, synthetisches Hydrotalcit, Natriumbenzoat, Kaliumbenzoat, Natriumstearat und Calciumstearat oberflächenbeschichtet ist.

5. Das Metallsalz der Hypophosphorigsäure gemäß den Ansprüchen 1 bis 4, **dadurch gekennzeichnet, dass** das Verhältnis Metallsalz der Hypophosphorigsäure / Verbindungen (a) bis (c) von 100/1 bis 5/1 (w/w) beträgt.

6. Ein Verfahren zur Herstellung des Metallsalzes der Hypophosphorigsäure gemäß den Ansprüchen 1 bis 5, **dadurch gekennzeichnet, dass** ein Metallsalz der Hypophosphorigsäure durch inniges Inkontaktbringen des Metallsalzes der Hypophosphorigsäure und einer oder mehrer wie in Anspruch 1 definierten Verbindungen (a) bis (c) oberflächenbeschichtet wird, gefolgt von Filtration und Trocknen des so erhaltenen Produktes.

7. Verfahren gemäß Anspruch 6, das in einem Lösungsmittel durchgeführt wird.

8. Ein Verfahren zur Herstellung des Metallsalzes der Hypophosphorigsäure gemäß den Ansprüchen 1 bis 5, **gekennzeichnet dadurch, dass** ein Metallsalz der Hypophosphorigsäure durch mechanisches Vermahlen in einer Mühle oberflächenbeschichtet wird und optional in einem mechanischen Mischer mit geringer oder hoher Geschwindigkeit gemischt wird.

9. Das Verfahren gemäß den Ansprüchen 6 bis 8, wobei ein Bindemittel hinzugefügt wird.

10. Die Verwendung des Metallsalzes der Hypophosphorigsäure gemäß den Ansprüchen 1 bis 5 als Flammschutzmittel in thermoplastischen Polymerzusammensetzungen, Polyestern oder Polyamiden, entweder mit Glasfasern verstärkt oder unverstärkt.

11. Polymere Zusammensetzung enthaltend zumindest ein Metallsalz der Hypophosphorigsäure gemäß den Ansprüchen 1 bis 5.

12. Die Polymere Zusammensetzung gemäß Anspruch 11, **dadurch gekennzeichnet, dass** es Aluminiumhypophosphit oder eine Mischung aus Aluminium- und Magnesiumhypophosphit enthält, das gemäß Anspruch 1 oberflächenbeschichtet ist.

13. Polymere Zusammensetzung gemäß Anspruch 12, **dadurch gekennzeichnet, dass** das Verhältnis polymere Zusammensetzung / oberflächenbeschichtetes Metallsalz der Hypophosphorigsäure von 50/1 bis 1/1 (w/w) beträgt.

14. Polymere Zusammensetzung gemäß Anspruch 13, **dadurch gekennzeichnet, dass** das Verhältnis polymere Zusammensetzung /
oberflächenbeschichtetes Metallsalz der Hypophosphorigsäure von 20/1 bis 3/1 (w/w) beträgt.

15. Polymere Zusammensetzung gemäß den Ansprüchen 11 bis 14, **dadurch gekennzeichnet, dass** es weiterhin ein Epoxidharz und/oder ein organisches Bindemittel enthält.

16. Polymere Zusammensetzung gemäß den Ansprüchen 11 bis 15, **dadurch gekennzeichnet, dass** es mehr als ein oberflächenbeschichtetes Metallsalz der Hypophosphorigsäure gemäß den Ansprüchen 1 bis 5 enthält.

17. Polymere Zusammensetzung gemäß den Ansprüchen 11 bis 16, wobei das Polymer ausgewählt ist aus Polyestern und Polyamiden.

18. Polymere Zusammensetzung gemäß den Ansprüchen 11 bis 17, wobei das Polymer Polybutylenterephtalat (PBT) ist.

19. Polymere Zusammensetzung gemäß den Ansprüchen 11 bis 18 weiterhin enthaltend ein Stickstoff-haltiges Flammschutzmittel.

20. Flammschutzadditiv für polymere Zusammensetzungen, das zumindest ein oberflächenbeschichtetes Metallsalz der Hypophosphorigsäure gemäß den Ansprüchen 1 bis 5 enthält.

21. Artikel gefertigt aus einer polymeren Zusammensetzung gemäß den Ansprüchen 11 bis 19.

## Revendications

1. Sel métallique d'acide hypophosphoreux **caractérisé en ce qu'**il est revêtu en surface avec au moins un composé choisi parmi :
(a) les hydrates de métal alcalin ou alcalino-terreux ;
(b) l'hydrotalcite ou les composés du type hydrotalcite ; et
(c) les sels d'acide organique de métal alcalin ou alcalino-terreux.

2. Sel métallique d'acide hypophosphoreux selon la revendication 1, qui est choisi parmi les sels de métal alcalin et les sels de métal alcalino-terreux naturels ou synthétiques d'acide hypophosphoreux.

3. Sel métallique d'acide hypophosphoreux selon la revendication 2, qui est choisi parmi l'hypophosphite de magnésium, l'hypophosphite de calcium et l'hypophosphite d'aluminium.

4. Sel métallique d'acide hypophosphoreux selon les revendications 1 à 3, **caractérisé en ce qu'**il est revêtu en surface par un ou plusieurs composés choisis parmi l'hydroxyde de magnésium, l'hydrotalcite synthétique, le benzoate de sodium, le benzoate de potassium, le stéarate de sodium et le stéarate de calcium.

5. Sel métallique d'acide hypophosphoreux selon les revendications 1 à 4, **caractérisé en ce que** le rapport sel métallique d'acide hypophosphoreux/composés (a) à (c) vaut de 100/1 à 5/1 (p/p).

6. Procédé de préparation du sel métallique d'acide hypophosphoreux selon les revendications 1 à 5, **caractérisé en ce qu'**un sel métallique d'acide hypophosphoreux est revêtu en surface par mise en contact intime du sel métallique d'acide hypophosphoreux et d'un ou plusieurs des composés (a) à (c) tels que définis dans la revendication 1, puis filtration et séchage du produit ainsi obtenu.

7. Procédé selon la revendication 6, qui est réalisé dans un solvant.

8. Procédé de préparation du sel métallique d'acide hypophosphoreux selon les revendications 1 à 5, **caractérisé en ce qu'**un sel métallique d'acide hypophosphoreux est revêtu en surface par broyage mécanique dans une machine à fraiser et mélange facultatif dans un mélangeur mécanique à vitesse lente ou élevée.

9. Procédé selon les revendications 6 à 8, dans lequel un agent de liaison est ajouté.

10. Utilisation du sel métallique d'acide hypophosphoreux selon les revendications 1 à 5, comme agent ignifuge dans des compositions polymères thermoplastiques, des poly(esters) ou poly(amides), soit renforcés, soit non renforcés avec des fibres de verre.

11. Composition polymère qui comprend au moins un sel métallique d'acide hypophosphoreux selon les revendications 1 à 5.

12. Composition polymère selon la revendication 11, **caractérisée en ce qu'**elle comprend de l'hypophosphite d'aluminium ou un mélange d'hypophosphite d'aluminium et de magnésium revêtu en surface selon la revendication 1.

13. Composition polymère selon la revendication 12, **caractérisée en ce que** le rapport entre composition polymère/sels métalliques d'acide hypophosphoreux revêtus en surface varie de 50/1 à 1/1 (p/p).

14. Composition polymère selon la revendication 13, **caractérisée en ce que** le rapport entre composition polymère/sels métalliques d'acide hypophosphoreux revêtus en surface varie de 20/1 à 3/1 (p/p).

15. Composition polymère selon les revendications 11 à 14, **caractérisée en ce qu'**elle comprend en outre une résigne d'époxyde et/ou un liant organique.

16. Composition polymère selon les revendications 11 à 15, **caractérisée en ce qu'**elle comprend plus d'un sel métallique d'acide hypophosphoreux revêtu en surface selon les revendications 1 à 5.

17. Composition polymère selon les revendications 11 à 16, dans laquelle le polymère est choisi parmi les poly(esters) et les poly(amides).

18. Composition polymère selon les revendications 11 à 17, dans laquelle le polymère est le poly(téréphtalate de butylène) (PBT).

19. Composition polymère selon les revendications 11 à 18, qui comprend en outre un agent ignifuge contenant de l'azote.

20. Additif ignifuge pour compositions polymères qui comprend au moins un sel métallique d'acide hypophosphoreux revêtu en surface selon les revendications 1 à 5.

21. Article constitué d'une composition polymère selon les revendications 11 à 19.
